# EUROPÄISCHE PATENTSCHRIFT

(11) **EP 0 518 135 B1**
(45) Veröffentlichungstag und Bekanntmachung des Hinweises auf die Patenterteilung: **03.01.1996**
(21) Anmeldenummer: 92108996.7
(22) Anmeldetag: 28.05.1992
(51) Int. Cl.: C05F 17/02

(54) **Rottebett-Anlage**
Installation for composting waste material
Installation de compostage de matériaux de déchets

(30) Priorität: 14.06.1991 DE 4119722
(43) Veröffentlichungstag der Anmeldung: 16.12.1992
(73) Patentinhaber: KOCH TRANSPORTTECHNIK GmbH, D-66787 Wadgassen (DE)
(72) Erfinder: Robic, Patrice, W-6632 Saarwellingen (DE); Sickinger, Roland, W-7401 Nehren (DE); Berger, Joachim, W-6626 Bous (DE)
(74) Vertreter: Bernhardt, Winfrid, Dr.-Ing.

(56) Entgegenhaltungen:
- EP-A- 0 060 410
- EP-A- 0 423 514

## Beschreibung

Die Erfindung betrifft eine rechteckige Rottebett-Anlage, in der das Material in in der Querrichtung sich erstreckenden Schüttungen ausgelegt ist, mit
einer an einer quer über das Rottebett sich erstreckenden und in Längsrichtung des Rottebettes verfahrbaren Brücke angeordneten Einrichtung zum Auslegen des Materials in einer ersten Schüttung sowie zum Auslegen in fortschreitend weiteren Schüttungen,
einer an einer quer über das Rottebett sich erstreckenden und in der Längsrichtung des Rottebetts verfahrbaren zweiten Brücke angeordneten und entlang der zweiten Brücke verschiebbaren Einrichtung zum Aufnehmen des Materials zwecks Umschaufeln in die fortschreitend weiteren Schüttungen sowie zum Aufnehmen des Materials von seiner letzten Schüttung zwecks Abfördern,
wobei die erstgenannte Einrichtung von einem entlang des Rottebettes verlaufenden Fördermittel aus beschickt ist
und die Einrichtung zum Aufnehmen des Materials über ein entlang der zweiten Brücke verlaufendes Fördermittel auf das erstgenannte Fördermittel abgibt.

Eine solche Rottebett-Anlage ist in jüngster Zeit durch die EP 0 423 514 A2 bekannt geworden.

Bei vorher durch Benutzung bekannten Rottebett-Anlagen besteht die Einrichtung zum Aufnehmen des Materials zwecks Umschaufeln aus einem Schaufelrad, das kombiniert ist mit einem von dem Schaufelrad aus in Längsrichtung des Rottebettes nach hinten sich erstreckenden kurzen Förderband, das die nächste Schüttung legt. Diese Einrichtung arbeitet sich immer wieder neu vom Ende nach vorn zum Anfang des Rottebettes hindurch.

Nach der EP 0 423 514 A2 ist die Einrichtung zum Auslegen des Materials, die bislang nur die erste Schüttung an einer bestimmten Stelle gelegt hat, beweglich gemacht und auch zum Umschaufeln des Materials verwendet. Dabei ist die Verbindung für den Materialübergang von der Einrichtung zum Aufnehmen auf die Einrichtung zum Auslegen variabel: An beliebiger Stelle aufgenommenes Material kann an beliebiger Stelle neu ausgeschüttet werden.
Nach der EP 423 514 A2 wird beim Auslegen der ersten Schüttung die zweite Brücke in eine Parkposition vor dem Rottebett gefahren, und beim Aufnehmen der letzten Schüttung steht die erstgenannte Brücke in einer Parkstellung hinter dem Rottebett.

Es ist möglich, die zeitlich aufeinanderfolgenden Schüttungen verschieden lange liegen zu lassen.
Es kann auch die erste Schüttung an beliebiger Stelle angeordnet werden und vor allem eine beliebige Schüttung als "Frischkompost" herausgegriffen und ausgetragen werden.

Der Erfindung liegt die Aufgabe zugrunde, die Ausnutzung der Rottebett-Anlage weiter zu steigern.

Gemäß der Erfindung wird dieser Zweck dadurch erfüllt, daß die erstgenannte Brücke über oder unter der zweiten Brücke hinweg verfahrbar ist.

Damit kann zum Auslegen der ersten Schüttung wie auch zum Aufnehmen der letzten Schüttung die Stellung der beiden Brücken zueinander, für das Umschaufeln zwingend die erstgenannte Brücke hinter der zweiten, gewechselt werden.

Der Wechsel der Stellung der Brücken zueinander bedeutet, daß gleichzeitig neues Material ausgelegt und altes abgefördert werden kann. Damit sind die Einrichtungen erheblich besser ausgenutzt.

Auch in den erwähnten, durch Benutzung bekannten Anlagen kann, bedingt durch das von dem Schaufelrad aus nach hinten sich erstreckende Förderband zum Umschaufeln, ein Endabschnitt der das Rottebett umschließenden Halle nicht genutzt werden, und zwar auf der Länge dieses Förderbandes (etwa 14 m); denn die letzte Schüttung muß von dem Schaufelrad noch aufgenommen werden können. Nach der Erfindung kann das Schaufelrad oder die sonstige Einrichtung zum Aufnehmen des Materials bis zum Ende der Halle gelangen. Darüber hinaus ist innerhalb des Rottebettes für ein Umschaufeln nach hinten fast keine Lücke erforderlich.

Die Erfindung betrifft ferner eine kreisförmige Rottebett-Anlage mit einer auf einer zentralen Säule drehbar und am Umfang des Rottebettes fahrbar gelagerten Brücke, an der eine Einrichtung zum Auslegen des, an der zentralen Säule zugeführten, Materials in einer langgestreckten ersten Schüttung angeordnet ist, einer entlang einer auf der zentralen Säule drehbar und am Umfang des Rottebettes fahrbar gelagerten Brücke verschiebbaren Einrichtung zum Aufnehmen des Materials zwecks Umschaufeln in fortlaufend weitere Schüttungen und einer an der zentralen Säule angeordneten Einrichtung zum Übernehmen des Materials von seiner letzten Schüttung und zum Abfördern.

Diese Rottebett-Anlage ist in der älteren deutschen Patentanmeldung P 40 25 681.2 vorgeschlagen. Hier ist das Rottebett spiralförmig gelegt. Im Gegensatz zu dem in dem rechteckigen Rottebett jeweils mit einem Zwischenschritt voran hin- und hergehenden Vorschub der Einrichtungen zum Aufnehmen und Umschaufeln vollzieht sich in dem kreisförmigen Rottebett die Bewegung im wesentlichen gleichförmig; die fortschreitenden Schüttungen werden als Spiralwindungen erzeugt.

In Abwandlung dieser Rottebett-Anlage äußert sich die erfindungsgemäße Neuerung darin, daß sich die Schüttungen radial erstrecken, daß die Brücke, an der die Einrichtung zum Aufnehmen des Materials verschiebbar ist, eine zweite, unabhängig von der erstgenannten Brücke verfahrbare Brücke ist, daß die Einrichtung zum Aufnehmen des Materials über ein entlang der zweiten Brücke verlaufendes Fördermittel an der zentralen Säule wahlweise an die Einrichtung zum Übernehmen des Materials von seiner letzten Schüttung und zum Abfördern abgibt oder an die genannte oder eine weitere Materialzuführung für die erstgenannte Einrichtung jeweils zum Auslegen auch der weiteren Schüttungen durch diese.

Auch in dieser vorgeschlagenen Rottebett-Anlage sind eine Brücke mit einer Einrichtung zum Auslegen des Materials und eine zweite Brücke mit einer Einrichtung zum Aufnehmen des Materials vorhanden, die sich beide quer über das, hier kreisbogenförmig gekrümmte, Rottebett erstrecken und in dem Materialfluß vom Anfang zum Ende der Rottebettbelegung unterschiedliche Stellungen zueinander einnehmen, nämlich zum Auslegen des Materials in der ersten Schüttung und zum Aufnehmen des Materials von seiner letzten Schüttung die zweite Brücke hinter der ersteren Brücke und zum Umschaufeln die erstere Brücke hinter der zweiten Brücke. Hier ist jedoch, durch Verschwenken, der Stellungswechsel ohne Überschneidung möglich, so daß die beiden Brücken nicht eine über die andere verfahrbar zu sein brauchen.

Die Möglichkeit, den Rotteschwund auszugleichen und das Rottebett auf seiner nutzbaren Fläche voll belegt zu halten und dies in überall unverminderter Höhe, besteht im Gegensatz zu den bekannten Anlagen uneingeschränkt.

Bei der rechteckigen Rottebett-Anlage ergibt sich noch der weitere Vorteil eines höheren Anteils der nutzbaren Fläche. In der bekannten Anlage bedingt das erwähnte von dem Schaufelrad aus nach hinten sich erstreckende Förderband zum Umschaufeln, daß ein Endabschnitt der das Rottebett umschließenden Halle nicht genutzt werden kann, und zwar auf der Länge dieses Förderbandes (etwa 14 m); denn die letzte Schüttung muß von dem Schaufelrad noch aufgenommen werden können. Nach der Erfindung kann das Schaufelrad oder die sonstige Einrichtung zum Aufnehmen des Materials bis zum Ende der Halle gelangen. Darüber hinaus ist innerhalb des Rottebettes für ein Umschaufeln nach hinten fast keine Lücke erforderlich.

Für die kreisförmige Rottebett-Anlage wird als vorteilhafte Ausgestaltung weiter vorgeschlagen, daß die beiden Brücken mit einer Steuerung für Hin- und Herfahren mit einem Schwenkwinkel zwischen 24 und 36° versehen sind zum Auslegen bzw. Aufnehmen sektorförmiger Schüttungen.

Vorteilhafte Ausgestaltungen der rechteckigen Rottebett-Anlage sind in der nachfolgenden Beschreibung eines Ausführungsbeispieles angegeben.

Die Zeichnungen geben das Ausführungsbeispiel wieder.
- Fig. 1: zeigt eine Draufsicht auf eine rechteckige Rottebett-Anlage,
- Fig. 2: zeigt einen senkrechten Querschnitt durch die Anlage etwa nach Linie II-II in Fig. 1,
- Fig. 3: zeigt einen senkrechten Querschnitt durch die Anlage etwa nach Linie III-III in Fig. 1 und

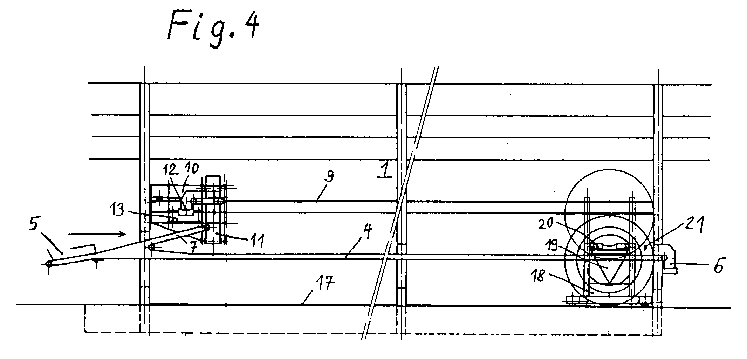

- Fig. 4: zeigt einen senkrechten Längsschnitt durch die Anlage etwa nach Linie IV-IV in Fig. 1.

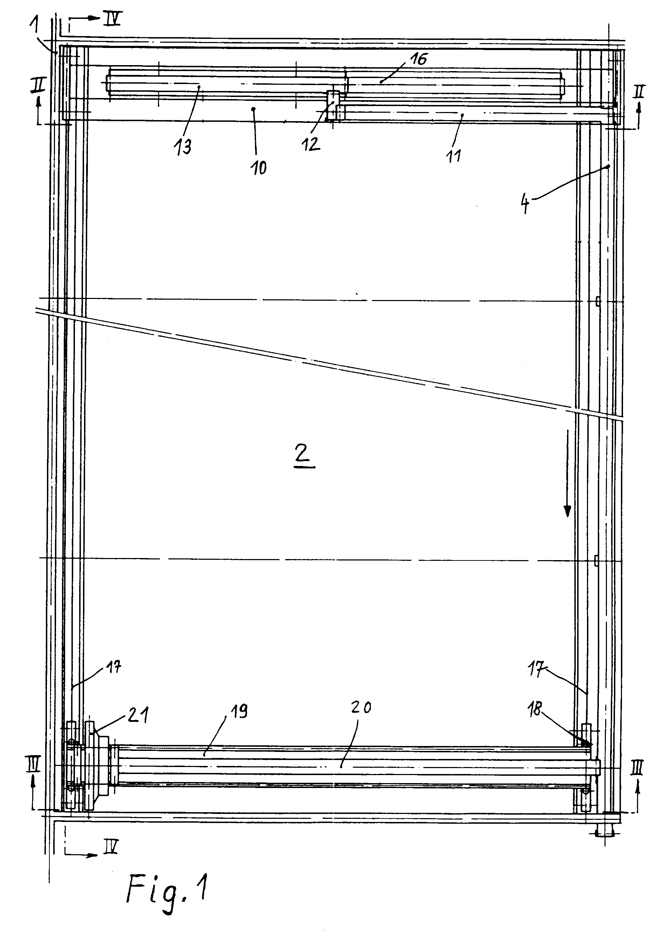

In den Zeichnungen erscheint die Hälfte einer Halle 1 mit einem Rottebett 2; die andere Hälfte schließt sich mit einem gleichen Rottebett gemäß Fig. 1 bis 3 nach rechts an. Das Rottebett 2 hat im Beispiel eine Breite von 30 m und eine Länge von 140 m.

An der Seite der Hallenmitte führt auf einem Sockel 3 ein Förderband 4 in die Halle 1 hinein, am Rand des Rottebetts 2 entlang und wieder aus der Halle heraus. Eine Aufgabevorrichtung zum Beladen des Förderbandes 4 ist bei 5 zu erkennen. Über dem Ende des Förderbandes ist eine Haube 6 angeordnet, die hier den Abwurf des Materials, etwa auf ein Lastfahrzeug, lenkt.
In an sich bekannter Weise ist der Obertrum des Förderbandes 4 in eine Bandschleife 7 geführt, die mittels eines nicht gezeichneten Bandschleifenwagens auf der Länge des Förderbandes 4 verlagert werden kann.

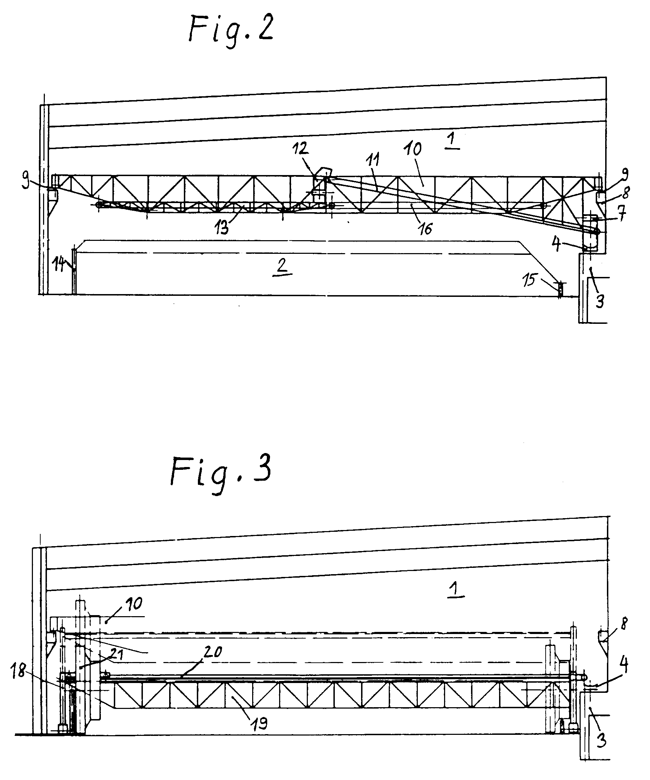

Auf an Stützen der Hallenkonstruktion angebrachten Konsolen 8 sind Schienen 9 verlegt, auf denen eine Brücke 10 verfahrbar ist.
An der Brücke 10 führt ein Förderband 11 von der Abwurfstelle der immer der Brücke 10 nachgeführten Bandschleife 7 aufwärts bis zur Mitte der Brücke 10. An seinem Abwurfende wird das Material durch eine Haube 12 geführt, die über einem weiteren Förderband 13 oder, je nach dessen Stellung, frei endet. Das Förderband 13 hat etwa die Hälfte der Länge der Brücke 10, ist entlang der Brücke 10 verschiebbar und in beiden Richtungen antreibbar. In der in Fig. 1 und 2 gezeigten Stellung fördert es nach links bis an den dortigen, durch eine Mauer 14 begrenzten Rand des Rottebettes 2 sowie, in der anderen Richtung, nach rechts bis knapp neben der Mitte. Durch Verschieben des Förderbandes nach rechts kann entsprechend die gesamte Breite des Rottebettes 2 überstrichen werden bis zum anderen Rand, an dem das Rottebett durch eine niedrigere Mauer 15 begrenzt ist. Das ist durch die in dickeren Linien ausgeführte Darstellung 16 angedeutet. Um in der Mitte zu füllen, ist das Förderband 13 ganz unter der Haube 12 nach rechts oder links weggeschoben.

Auf auf dem Boden der Halle 1 angebrachten Schienen 17 ist eine in einer Portalkonstruktion 18 ausgeführte zweite Brücke 19 verfahrbar. Sie hat einen dreieckigen Querschnitt, die eine Dreieckseite nach oben und die Spitze nach unten, und ist in der Portalkonstruktion mittels hydraulisch auszufahrender Stützen heb- und senkbar angeordnet.
Auf der zweiten Brücke 19 führt ein auf das Förderband 4 abwerfendes Förderband 20 entlang.
Ein Schaufelrad 21 ist auf der gesamten Länge der zweiten Brücke 19, die es durchsetzt, verschiebbar. Das von ihm aufgenommene Material fällt auf dem oberen Bogen des Schaufelweges zwischen den Schaufeln hindurch auf das Förderband 20.

Um neu ankommendes Material in der ersten Schüttung auszulegen, nimmt die Brücke 10 in der Regel die in Fig. 1 gezeigte Stellung am Anfang des Rottebettes 2 ein. Im Prinzip ist diese Stellung jedoch beliebig.
Um das Material auszutragen, nimmt die Brücke 19 in der Regel die in Fig. 1 gezeigte Stellung am Ende des Rottebettes 2 ein. Auch diese Stellung ist jedoch im Prinzip beliebig.

Um das Material umzuschaufeln, wird die relative Stellung der beiden Brücken zueinander vertauscht. Die Brücke 10 fährt über die Brücke 19 hinweg bzw. die Brücke 19 fährt unter der Brücke 10 hindurch, was in der abgesenkten Stellung der Brücke 19 möglich ist. An beliebiger Stelle von dem Förderband 20 auf das Förderband 4 abgeworfenes Material kann in Förderrichtung des Bandes 4 (Pfeil) an beliebiger Stelle dahinter durch die Bandschleife 7 auf das Förderband 11 übergeben werden. Auch sehr eng aufeinanderfolgende Stellungen sind möglich.

## Patentansprüche

1. Rechteckige Rottebett-Anlage (1,2), in der das Material in in der Querrichtung sich erstreckenden Schüttungen ausgelegt ist, mit
einer an einer quer über das Rottebett (2) sich erstreckenden und in Längsrichtung des Rottebettes (2) verfahrbaren Brücke (10) angeordneten Einrichtung (11-13) zum Auslegen des Materials in einer ersten Schüttung sowie zum Auslegen in fortschreitend weiteren Schüttungen,
einer an einer quer über das Rottebett (2) sich erstreckenden und in der Längsrichtung des Rottebetts (2) verfahrbaren zweiten Brücke (19) angeordneten und entlang der zweiten Brücke (19) verschiebbaren Einrichtung (20,21) zum Aufnehmen des Materials zwecks Umschaufeln in die fortschreitend weitere Schüttungen sowie zum Aufnehmen des Materials von seiner letzten Schüttung zwecks Abfördern,
wobei die erstgenannte Einrichtung (11-13) von einem entlang des Rottebettes (2) verlaufenden Fördermittel (4,7) aus beschickt ist
und die Einrichtung (20,21) zum Aufnehmen des Materials über ein entlang der zweiten Brücke (19) verlaufendes Fördermittel (20) auf das erstgenannte Fördermittel (4) abgibt,
dadurch gekennzeichnet,
daß die erstgenannte Brücke (10) über oder unter der zweiten Brücke (19) hinweg verfahrbar ist.

2. Kreisförmige Rottebett-Anlage mit
einer auf einer zentralen Säule drehbar und am Umfang des Rottebettes fahrbar gelagerten Brücke, an der eine Einrichtung zum Auslegen des, an der zentralen Säule zugeführten, Materials in einer langgestreckten ersten Schüttung angeordnet ist,
einer entlang einer auf der zentralen Säule drehbar und am Umfang des Rottebettes fahrbar gelagerten Brücke verschiebbaren Einrichtung zum Aufnehmen des Materials zwecks Umschaufeln in fortlaufend weitere Schüttungen und
einer an der zentralen Säule angeordneten Einrichtung zum Übernehmen des Materials von seiner letzten Schüttung und zum Abfördern,
dadurch gekennzeichnet,
daß sich die Schüttungen radial erstrecken,
daß die Brücke, an der die Einrichtung zum Aufnehmen des Materials verschiebbar ist, eine zweite, unabhängig von der erstgenannten Brücke verfahrbare Brücke ist, und daß die Einrichtung zum Aufnehmen des Materials über ein entlang der zweiten Brücke verlaufendes Fördermittel an der zentralen Säule wahlweise an die Einrichtung zum Übernehmen des Materials von seiner letzten Schüttung und zum Abfördern abgibt oder an die genannte oder eine weitere Materialzuführung für die erstgenannte Einrichtung jeweils zum Auslegen auch der weiteren Schüttungen durch diese.

3. Anlage nach Anspruch 1 oder 2,
dadurch gekennzeichnet,
daß die Einrichtung (11-13) zum Auslegen des Materials ein nahe der Mitte der Brücke (10) abwerfendes Förderband (11) aufweist, unter dem ein übernehmendes Förderband (13) etwa von der halben Länge der Brücke (10) angeordnet ist, das in beiden Richtungen antreibbar und entlang der Brücke (10) verschiebbar ist.

4. Anlage nach einem der Ansprüche 1 bis 3,
dadurch gekennzeichnet,
daß die Einrichtung (20,21) zum Aufnehmen ein, vorzugsweise von der zweiten Brücke (19) durchsetztes, Schaufelrad (21) oder Becherwerk aufweist und/oder das auf dieser Brücke (19) verlaufende Fördermittel (20) ein Förderband (20) ist.

5. Anlage nach einem der Ansprüche 1, 3 oder 4,
dadurch gekennzeichnet,
daß die beiden Brücken (10;19) auf in verschiedener Höhe an der Hallenkonstruktion (1) angebrachten Schienen (9;17) verfahrbar sind, vorzugsweise die erstgenannte (10) über der zweiten (19).

6. Anlage nach Anspruch 5,
dadurch gekennzeichnet,
daß die zweite Brücke (19) in einer Portalkonstruktion (18) ausgeführt ist, die auf auf dem Boden der Hallenkonstruktion (1) angebrachten Schienen (17) verfahrbar ist.

7. Anlage nach Anspruch 6,
dadurch gekennzeichnet,
daß die zweite Brücke (19) in der Portalkonstruktion (18) heb- und senkbar ist.

8. Anlage nach einem der Ansprüche 1 oder 3 bis 7,
dadurch gekennzeichnet,
daß das erstgenannte Fördermittel (4) ein, vorzugsweise seitlich neben dem Rottebett (2) verlaufendes, Förderband (4) ist, vorzugsweise mit einer auf das erstgenannte (11) Förderband führenden Bandschleife (7).

9. Anlage nach einem der Ansprüche 2 bis 4,
dadurch gekennzeichnet,
daß die beiden Brücken mit einer Steuerung für Hin- und Herfahren mit einem Schwenkwinkel zwischen 24 und 36° versehen sind zum Auslegen bzw. Aufnehmen sektorförmiger Schüttungen.

## Claims

1. A rectangular installation (1, 2) for composting waste material laid out therein in transversely extending piles, having
a device (11-13) for laying the material out in a first pile and in continuous additional piles, said device being arranged on a bridge (10) spanning the composting bed (2) and travelling longitudinally of the composting bed (2);
a device (20, 21) for taking up the material to transfer the same to the continuous additional piles and for taking up the material from its final pile for removal purposes, said device being arranged on a second bridge (19) spanning the composting bed (2) and travelling longitudinally of the composting bed (2), and said device (20, 21) further being displaceable along the second bridge (19);
with the first-given device (11-13) being loaded by a conveying means (4, 7) running along the composting bed (2); and
with the device (20, 21) for taking up the material discharging the same onto the first-given conveying means (4) via a conveying means (20) running along said second bridge (19);
characterised in that
the first-given bridge (10) can be moved over or under the second bridge (19).

2. A circular installation for composting waste material, having
a bridge swivel-mounted on a central column and movably mounted to the periphery of the composting bed, having a device arranged on said bridge for laying out the material fed at the central column in an elongated first pile;
a device for taking up the material to transfer it to continuous additional piles, said device being displaceable along a bridge swivel-mounted on the central column and movably mounted to the periphery of the composting bed; and
a device arranged on the central column, for taking over the material from its final pile for removal purposes,
characterised in that
the piles extend radially;
the bridge with the displaceable device for taking up the material is a second bridge travelling independently of the first-given bridge; and
the device for taking up the material discharges the material at the central column via a conveying means running along the second bridge, alternatively to the device for taking over the material from its final pile and removing the same, or to the given material feed or to a further material feed for the first-given device, for this device to lay out the respective piles, including the additional piles.

3. The installation according to claim 1 or 2,
characterised in that
the device (11-13) for laying out the material has a dumping conveyor belt (11) near the middle of the bridge (10), with a take-over conveyor belt (13) approximately one-half the length of the bridge (10), drivable in both directions and displaceable along the bridge (10), being arranged below said conveyor belt (11).

4. The installation according to any of claims 1 to 3,
characterised in that
the device (20, 21) for taking up the material has a bucket wheel (21) or bucket conveyor preferably passed through by the second bridge (19), and/or the conveying means (20) running on this bridge (19) is a conveyor belt (20).

5. The installation according to any of claims 1, 3 or 4, characterised in that
the two bridges (10; 19) travel on rails (9; 17) attached at different heights to the hall structure (1), the first-given bridge (10) preferably above the second (19).

6. The installation according to claim 5,
characterised in that
the second bridge (19) is designed in a gantry-type structure (18) travelling on rails (17) attached to the floor of the hall structure (1).

7. The installation according to claim 6,
characterised in that
the second bridge (19) can be raised and lowered in the gantry-type structure (18).

8. The installation according to any of claims 1 or 3 to 7,
characterised in that
the first-given conveying means (4) is a conveyor belt (4) preferably running alongside the composting bed (2) and preferably having a belt loop (7) leading to the first-given (11) conveyor belt.

9. The installation according to any of claims 2 to 4,
characterised in that
the two bridges are provided with a control for travel to and fro at a pivoting angle of between 24 and 36° for the laying out and taking up, respectively, of sector-shaped piles.

## Revendications

1. Installation de compostage rectangulaire de matériaux de déchets (1,2) dans laquelle les matériaux sont déversés selon la direction transversale, et qui comporte
un dispositif (11-13) pour l'étalement des matériaux dans un premier déversement ainsi que pour l'étalement dans d'autres déversements successifs, ledit dispositif étant agencé à un pont roulant (10) qui s'étend transversalement au-dessus du lit de compostage (2) et qui se déplace dans la direction longitudinale de celle-ci (2),
un dispositif (20,21) pour le soulèvement des matériaux en vue du transfert dans le déversement suivant ainsi que pour le soulèvement des matériaux du dernier déversement en vue de l'évacuation, ledit dispositif étant agencé à un deuxiéme pont roulant (19) qui s'étend transversalement au-dessus du lit de compostage (2) et qui se déplace dans la direction longitudinale de celle-ci,
le premier dispositif (11-13) étant alimenté par un moyen de transport (4,7) qui s'étend le long du lit de compostage (2),
et le dispositif (20,21) pour le soulèvement des matériaux se déchargeant via un moyen de transport (20) qui s'étend de long du deuxième pont roulant (19) sur le premier moyen de transport (4),
caractérisée en ce que le premier pont roulant (10) est déplaçable au-dessus ou en dessous du deuxième pont roulant (19).

2. Installation de compostage circulaire de matériaux de déchets comportant
un pont logé de façon rotative sur une colonne centrale et se déplaçant sur la circonférence de l'installation de compostage, pont équipé d'un dispositif pour l'étalement des matériaux alimentés par la colonne centrale dans un premier déversement allongé,
un dispositif pour le soulèvement des matériaux en vue du transfert dans d'autres déversements successifs, ledit dispositif étant déplaçable le long d'un pont logé de façon rotative sur la colonne centrale et se déplaçant sur la circonférence de l'installation de compostage, et un dispositif agencé à la colonne centrale pour la réception des matériaux du dernier déversement et pour l'évacuation de ceux-ci,
caractérisée en ce que les déversements s'étendent radialement, en ce que le pont le long duquel le dispositif de soulèvement des matériaux est déplaçable consiste en un deuxième pont déplaçable indépendamment du premier pont, et en ce que le dispositif pour le soulèvement des matériaux se décharge à la colonne centrale, via un moyen de transport qui s'étend le long du deuxième pont, au choix, dans le dispositif pour la réception des matériaux de leur dernier déversement et pour l'évacuation oubien dans ladite alimentation ou une autre alimentation de matériaux pour le premier dispositif en vue de l'étalement des autres déversements par celui-ci.

3. Installation selon la revendication 1 ou 2, caractérisée en ce que le dispositif (11-13) pour l'étalement des matériaux comporte une bande transporteuse (11) qui décharge à proximité du milieu du pont (10) et en dessous duquel une bande transporteuse de réception (13) d'une longueur approximativement égale à la moitié de la longueur du pont (10) est agencée de façon déplaçable le long du pont (10), bande transporteuse entraînable dans les deux sens.

4. Installation selon l'une des revendications 1 à 3 caractérisée en ce que le dispositif (20,21) pour le soulèvement comporte une roue à godets (21) ou un élévateur à godets, de préférence traversé par le deuxième pont (19), et/ou en ce que le moyen de transfert (20) qui s'étend sur ce pont (19) consiste en une bande transporteuse (20).

5. Installation selon l'une des revendications 1 à 4 caractérisée en ce que les deux ponts (10;19) sont déplaçables sur des rails (9;17) agencés à diverses hauteurs de la construction du hall (1), le premier (10) étant avantageusement agencé au-dessus du deuxième (19).

6. Installation selon la revendication 5 caractérisée en ce que le deuxième pont (19) consiste en une construction en portique (18) qui est déplaçable sur des rails (17) agencés sur le sol de la construction du hall (1).

7. Installation selon la revendication 6 caractérisée en ce que le deuxième pont (19) est levable et descendable dans la construction en portique (18).

8. Installation selon l'une des revendications 1 ou 3 à 7 caractérisée en ce que le premier moyen de transport (4) consiste en une bande transporteuse (4), de préférence agencée latéralement à côté du lit de compostage (2), ladite bande transporteuse comportant de préférence une boucle de bande (7) qui mène sur la première bande transporteuse (11).

9. Installation selon l'une des revendications 2 à 4 caractérisée en ce que les deux ponts sont équipés d'une commande pour les déplacements dans un sens et dans le sens opposés dans un angle de pivotage compris entre 24 et 36° pour l'étalement ou le soulèvement de déversements en forme de secteur.
